# EUROPEAN PATENT SPECIFICATION

(11) **EP 0 666 807 B1**
(45) Date of publication and mention of the grant of the patent: **28.02.2001**
(21) Application number: 94909406.4
(22) Date of filing: 02.11.1993
(51) Int. Cl.: B60R 16/00, H01H 15/06

(54) **STEERING COLUMN STALK SWITCH APPARATUS**
Schalterhebel für eine Lenksäule
APPAREIL A COMMANDES SOUS FORME DE LEVIER MONTE SUR UNE COLONNE DE DIRECTION

(30) Priority: 06.11.1992 US 972597; 06.11.1992 US 972615; 23.07.1993 US 97268; 21.09.1993 US 124667
(43) Date of publication of application: 16.08.1995
(73) Proprietor: ITT MANUFACTURING ENTERPRISES, INC., Wilmington, Delaware 19801 (US)
(72) Inventor: DUROCHER, Daniel, J., Ann Arbor, MI 48103 (US); MILLER, Ellsworth, S., Rochester Hills, MI 48037 (US)
(74) Representative: Esser, Wolfgang
(86) International application number: US9310579
(87) International publication number: WO9411892

(56) References cited:
- US-A- 3 934 101
- US-A- 4 219 706
- US-A- 4 387 279

## Description

### Field of the Invention:

The present invention relates, in general, to motor vehicles and, more specifically, to steering column mounted switches controlling vehicle operating circuits and devices.

### State of the Art:

The evolution of steering column switches in motor vehicles has been toward greater integration of functions in a single switch. Previously, a plurality of individual switches, each controlling a single function, i.e., turn signals, windshield wipers, etc., were mounted on the vehicle dashboard or steering column. Current steering column switches are designed to control a variety of functions or vehicle operating circuits, for example, turn signals/hazard lights, high beam and low beam headlights with optional flash-to-pass, parking lights, and windshield wiper and wash functions, including multi-speed wipers with or without delay.

Typically, a steering column switch includes a single lever or stalk pivotally mounted on one side of a housing attached to the steering column in an easily accessible position for the driver of the vehicle. The lever is gimballed at one end in the housing so as to move in one of two mutually separate planes. Further, the lever may be provided with a rotatable end cap as well as a slidable member movable along the longitudinal axis of the lever. Actuators are mounted in the housing and, in response to movement of the lever in one direction, i.e., such as in one of the two mutually separate planes, or rotation of the end cap, move a switching member carrying contacts between various switching positions to effect the switching of electrical connections for a particular vehicle operating circuit Document US-A- 4387279 shows a stalk switch according to the preamble of claim 1.

In a typical application, pivotal movement of the lever in a substantially vertical plane about its gimballed connection to the housing controls the vehicle turn signals, and pivotal movement of the lever in a substantially horizontal plane controls the switching of the vehicle headlights between low beam, high beam and, optionally, flash-to-pass. Rotation of the end cap is used to control the operation of the vehicle windshield wiper system between on and off states and, optionally, a plurality of intermittent distinct speeds.

In vehicles employing an automatic cruise control, a slide switch or member is mounted in the end cap and is selectively movable between various positions including off, on, and a momentary resume set speed position. A spring-biased button is movably mounted in the end of the end cap and is employed to set a desired speed for the cruise control device. Movement of the slide member and/or the button between various positions cause electrical contacts mounted within the lever to close various circuits of the cruise control device depending upon the specific position of the slide member and the set speed button.

It is imperative in vehicles employing a cruise control device that the cruise control be designed to insure that the momentary resume set speed position is completely momentary such that a sticking of the switch member in the resume position is prevented. Furthermore, the steering column stalk switch must be easily and smoothly operable and, at the same time, must present a positive, user friendly tactile feel. To achieve these goals, the stalk switch must be designed with no looseness or play between the various members and must insure that the slide member positively engages each of the various detent positions during operation.

Thus, it would be desirable to provide a steering column stalk switch which incorporates numerous vehicle operating circuit functions into a single switch lever assembly. It would also be desirable to provide a steering column stalk switch which provides easy and smooth operation of the various movable components thereof and, at the same time, provides a positive, tactile feel for the movement of such components between various positions. It would also be desirable to provide a steering column stalk switch assembly which is easily assembled for a low manufacturing cost.

It would also be desirable to provide a method of manufacturing a steering column stalk switch which incorporates numerous vehicle operating circuit functions into a single switch lever assembly. It would also be desirable to provide a method of manufacturing a steering column stalk switch which provides easy and smooth operation of the various movable components thereof and, at the same time, provides a positive, tactile feel for the movement of such components between various positions. It would also be desirable to provide a method of manufacturing a steering column stalk switch which provides a simple assembly of the stalk switch.

### SUMMARY OF THE INVENTION

The present invention is a stalk switch apparatus mountable on a steering column of a motor vehicle for controlling various operating circuits and devices in the vehicle according to claim 1.

The stalk switch apparatus includes an elongated shaft having first and second opposed ends, the first end being pivotally attached to a switch housing mountable on the steering column of a vehicle. A hub is fixedly mounted on the second end of the shaft. A hollow housing with first and second ends is provided, the hub fixedly engaging the first end of the housing. A circuit board is disposed in the housing in fixed engagement with the hub. The circuit board includes a plurality of electrically conductive tracings disposed at timed intervals, with electrical conductors extending from the conductive tracings exteriorly of the shaft to various operating circuits in the vehicle, such as, for example, a vehicle cruise control device.

A first aperture is formed in the second end of the housing. A button is mounted in the housing and is accessible through the first aperture. The button is movable between first and second positions. A button biasing means is mounted in the housing and is seated between the circuit board and the button for biasing the button to the first position and for biasing the circuit board into fixed engagement with the hub. A plurality of first electrical contacts are mounted on the button and engage certain conductive tracings on the circuit board when the button is in the second position to close an electrical circuit connected to the certain conductive tracings. For example, the conductive tracings engaged by the first electrical contacts can be connected to the set speed circuit of a vehicle cruise control.

A carrier having first and second ends is slidably mounted in the housing. A radially outward extending projection is formed on the second end of the carrier and extends through a side wall aperture in the housing. A detent paw having first and second opposed ends is mounted on the carrier for movement between first and second positions with respect to the carrier. Means are mounted on the carrier in engagement with the second end of the detent paw for biasing the detent paw to the first position.

An arm is formed on the hub and extends axially therefrom. First and second spaced detents are formed on the arm. In addition, a ramp surface extends angularly from the second detent on the arm. The arm and the first end of the detent paw are axially aligned such that the first end of the detent paw is slidably movable between the first and second detents and along the angular ramp during sliding movement of the carrier. The detent paw biasing means engages the arm when the carrier is urged to a position in which the first end of the detent paw extends beyond the second detent and along the angular ramp for biasing the carrier toward the second detent. A lever is mounted about the shaft, contiguous with the exterior surface of the housing.

A plurality of second electrical contacts are mounted on the carrier. Each of the second electrical contacts, as well as the first electrical contacts, are in the form of resilient arms cantilevered from a first end attached to the carrier and the button and are movably disposed away from the carrier and the button at the second end. Further, the second ends of each of the plurality of first and second electrical contacts extend in the same direction toward the button so as to simplify the assembly of the stalk switch apparatus.

A plurality of second electrically conductive tracings are also arranged on the circuit board and are slidably engaged by the plurality of second electrical contacts. Each of the second group of second electrically conductive tracings also has a different starting point from one end of the circuit board for selective engagement with one of the plurality of second electrical contacts as the second electrical contacts are moved with the carrier between discrete carrier positions. In an exemplary embodiment, the second electrical contacts and associated second conductive tracings are respectively connected to the off, on, and resume set speed circuits of a vehicle cruise control.

The arm on the hub preferably includes a base wall, a first end connected to the hub and a second end spaced from the first end and extending axially outward from the hub. A first projection extends from the second end of the arm in a predetermined profile from the base wall. A second projection is also formed on the arm and is spaced from the first projection. The second projection has a second profile. The first detent is formed between the first and second projections. The angular ramp extends from the terminus of the second projection angularly from the base wall at a predetermined angle. The second detent is formed between the second projection and the start of the angular ramp.

The carrier preferably includes a base having a pair of spaced walls formed thereon. An inwardly extending flange is formed on one end of each wall and faces and is spaced from the flange on the opposed wall to define an aperture through the two walls. The detent paw is mounted exteriorly around the walls on the base of the carrier. The first end of the detent paw is disposed adjacent to and outside of the aperture formed between the flanges on the walls. The means for biasing the detent paw preferably comprises a coil spring which is seated between the flanges on the walls of the carrier and the second end of the detent paw. The coil spring is aligned with the second end of the arm on the hub so as to be engaged by an angular ramp formed on the second end of the arm as the carrier is moved toward the first end of the shaft and the detent paw moves from the second detent along the angular ramp on the arm. The spring is compressed by the second end of the arm and provides a compressive force to positively return the first end of the detent paw to the second detent on the arm when user force on the carrier is released. This minimizes the possibility of any sticking of the first end of the detent paw on the angular surface of the arm.

A unique method of manufacturing a steering column stalk switch apparatus is also disclosed. The present method comprises the steps of:
a. attaching a hub to an elongated tubular shaft;
b. forming a hollow housing with first and second apertures at first and second opposed ends, respectively;
c. movably mounting a button in the second aperture in the housing, with the button being movable between first and second positions and normally biased to the first position;
d. mounting a first electrical contactor with a plurality of first electrical contacts mounted thereon in the button, the first electrical contactor being movable with the button;
e. movably mounting a second electrical contactor with a plurality of second electrical contacts mounted thereon in the housing for movement between a plurality of positions;
f. co-planarly aligning the plurality of first and second electrical contacts in the housing;
g. mounting a circuit board having a plurality of electrically conductive tracings thereon in the housing in engagement with the hub, the conductive tracings being slidably engaged by the plurality of first and second electrical contacts during movement of the button and the second electrical contactor, respectively;
h. mounting the second electrical contactor on a movable carrier disposed in the housing, the carrier having a projection extending exteriorly of the housing for user force to move the carrier between a plurality of different positions;
i. biasingly mounting a detent paw on the carrier;
j. aligning an arm on the hub having first and second spaced detents and an angular inclined ramp extending from the second detent with the detent paw for selective engagement of the detent paw with the first and second detents and for movement of the detent paw on the angular ramp as the carrier undergoes user generated movement through the housing; and
k. forming the conductive traces on the circuit board at discrete intervals timed in position with the discrete positions of the first electrical contacts on the button and the second electrical contacts on the second electrical contactor mounted on the carrier for energizing separate electrical circuits connected to the conductive tracings in each discrete position of the button and the carrier.

In a preferred embodiment, the method also includes the steps of forming each of the plurality of first and second contacts in a cantilevered form with a first end of each of the contacts being fixedly connected to the respective first and second electrical contactors and a second end cantileverly extending from the first end and freely and movably disposed from the first and second electrical contactors, respectively. The second ends of each of the plurality of the first and second electrical contacts are oriented in the same direction toward the button in the housing. This simplifies insertion of the circuit board into the housing after the button and the carrier, respectively carrying the first and second electrical contactors, have been mounted in the housing. Ribs are preferably formed in the housing for spaced mounting of the carrier and the circuit board in the housing.

The present method also includes the steps of providing a biasing member in the housing to normally bias the button to the first position and, at the same time, bias the circuit board into fixed engagement with the hub. This eliminates any looseness or play between the button, the circuit board and the hub.

In the present method, the conductive tracings on the circuit board are formed at timed intervals with respect to the positions of the plurality of first and second electrical contacts when such first and second electrical contacts are moved various discrete positions by movement of the associated button, the carrier and the second electrical contactor. The conductive tracings are provided with different start points from one end of the circuit board such that selective contacts engage selective conductive tracings at each discrete position of the button and the carrier.

The present method also includes the step of forming the arm on the hub with an outer end and a first projection adjacent the outer end. The first projection has a selected first profile. A second projection is formed adjacent to and spaced from the first projection on the arm and has a second profile. The first detent is formed between the first and second projections. The angular ramp is formed at a selected angle on the arm and extends from the second projection. The second detent is formed between the second projection and the start of the ramp. In this manner, the height, ramp angles and the first and second profiles of the first and second projections, respectively, as well as the angle of the ramp may be tailored to meet the design requirements of any application. Primarily, the ramp angle, and the height and the profiles of the first and second projections are selected to provide a smooth sliding movement of the carrier as well as a positive tactile feel and engagement of the detent paw in each of the first and second detents. Furthermore, the unique orientation of the biasing spring used to bias the detent paw to the first position also biases the carrier normally away from the hub when the carrier is advanced to a position bringing the detent paw to the angular ramp. This assures a positive return of the detent paw from a position along the inclined ramp to the second detent and thereby prevents any sticking or undesirable positioning of the detent paw on the ramp after user force on the carrier has been removed.

The steering column mounted stalk switch apparatus of the present invention has a unique configuration which simplifies assembly and insures a positive tactile feel to movement of the button and the carrier between various positions. The profile, ramp angle and height of the various projections on the arm forming the first and second detents and the angular inclined ramp surface as well as the spring force of the detent biasing spring may be tailored to meet the needs of a particular application insofar as providing different detent locking movements, tactile feel, etc.

Further, the steering column stalk switch apparatus uniquely orients the cantilevered first and second contacts in the same direction so as to simplify the insulation of the contacts and the circuit board carrying the conductive tracings in the housing. Furthermore, the button biasing spring serves a dual purpose as it not only biases the button to a normal first position; but, also, urges the circuit board into fixed engagement with the hub to take up any tolerance or slack in the assembly of these components of the stalk switch apparatus. The detent paw biasing means or coil spring also serves a dual purpose in that it biases the detent paw to a first position and, also, biases the carrier toward the second detent position when the carrier is moved forward thereby assuring that the carrier and the detent paw mounted thereon will positively return to the second detent from the angular inclined surface or ramp after a moving force on the carrier has been released.

The method of manufacturing a steering column stalk switch apparatus of the present invention provides a simplified, low cost method of manufacturing such a stalk switch apparatus. The method provides selected tailoring of the design of the detent portions of the apparatus to meet the needs of a particular application and to address the desirable characteristics of smooth operation and positive tactile feel in each position of the carrier and the button.

### BRIEF DESCRIPTION OF THE DRAWING

The various features, advantages and other uses of the present invention will become more apparent by referring to the following detailed description and drawing in which:
Figure 1 is a front elevational view of a steering column stalk switch apparatus according to the present invention;
Figure 2 is a longitudinal cross sectional view generally taken along line 2-2 in Figure 1;
Figure 3 is an exploded, perspective view of the steering column stalk switch apparatus shown in Figure 1;
Figure 4 is a right end elevational view of the knob housing of the steering column stalk switch apparatus shown in Figure 1;
Figure 5 is a longitudinal cross sectional view of the set button shown in Figures 2 and 3;
Figure 6 is a perspective view showing the assembled carrier, detent paw and detent biasing spring;
Figure 7 is an exploded, front elevational view showing the mounting of the second electrical contactor on the carrier;
Figure 8 is a plan view showing the discrete positions of the first electrical contactor on the circuit board;
Figure 9 is a diagrammatic view showing the position of the contacts of the second electrical contact or on the circuit board;
Figure 10 is an enlarged side elevational view of the detents on the hub; and
Figure 11 is an enlarged side elevational view showing the detent paw on the resume set speed ramp.

### DESCRIPTION OF THE PREFERRED EMBODIMENTS

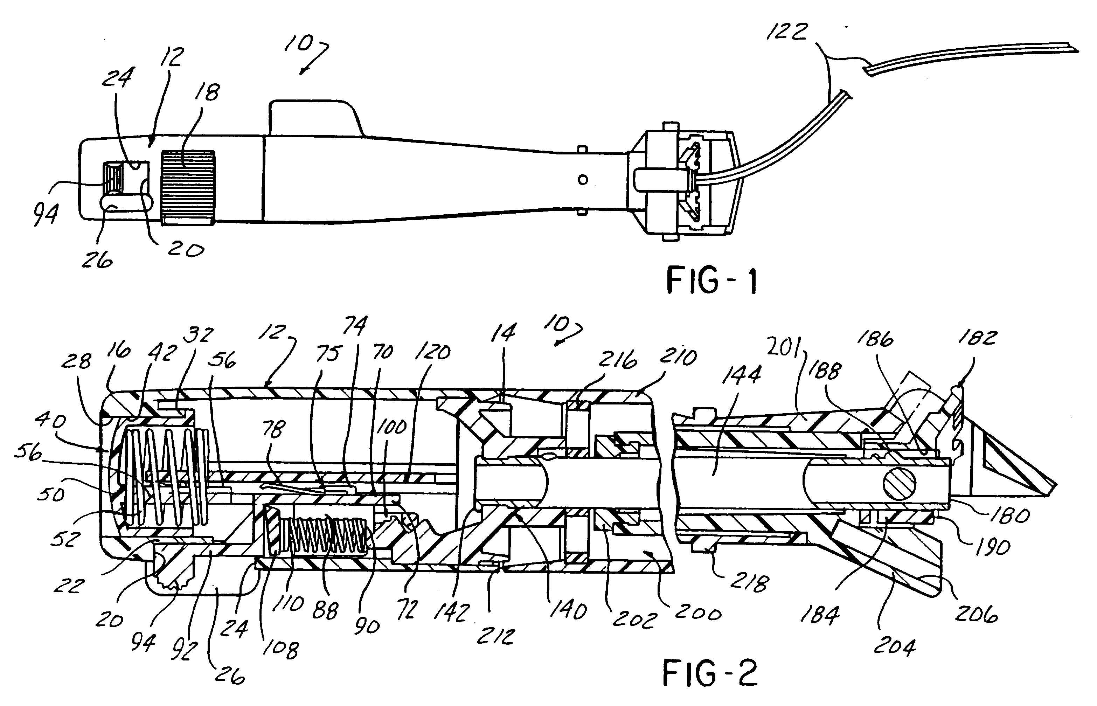

Referring now to the drawing, and to Figure 1 in particular, there is illustrated a steering column mounted stalk switch apparatus 10 which is operative to control the operation of various vehicle operating circuits and devices, such as a vehicle windshield wiper and washer controls, turn signals, vehicle headlight switching between low and high beam and the on, off, set and resume set speed operations of a vehicle cruise control device.

As shown in Figure 1, and in greater detail in Figures 2-4, the steering column stalk switch apparatus 10 includes a knob or housing 12 which may be stationarily or, preferably, rotatably mounted on the end of the stalk switch apparatus 10. The housing 12 is hollow and is preferably formed of molded plastic. The housing has first and second opposed ends 14 and 16, respectively, and a side wall which tapers from the slightly larger diameter first end 14 to the smaller diameter second end 16. A gripping ring 18, preferably in the form of an annular arrangement of knurls, is formed exteriorly on the side wall of the housing 12 to aid in rotating the housing 12.

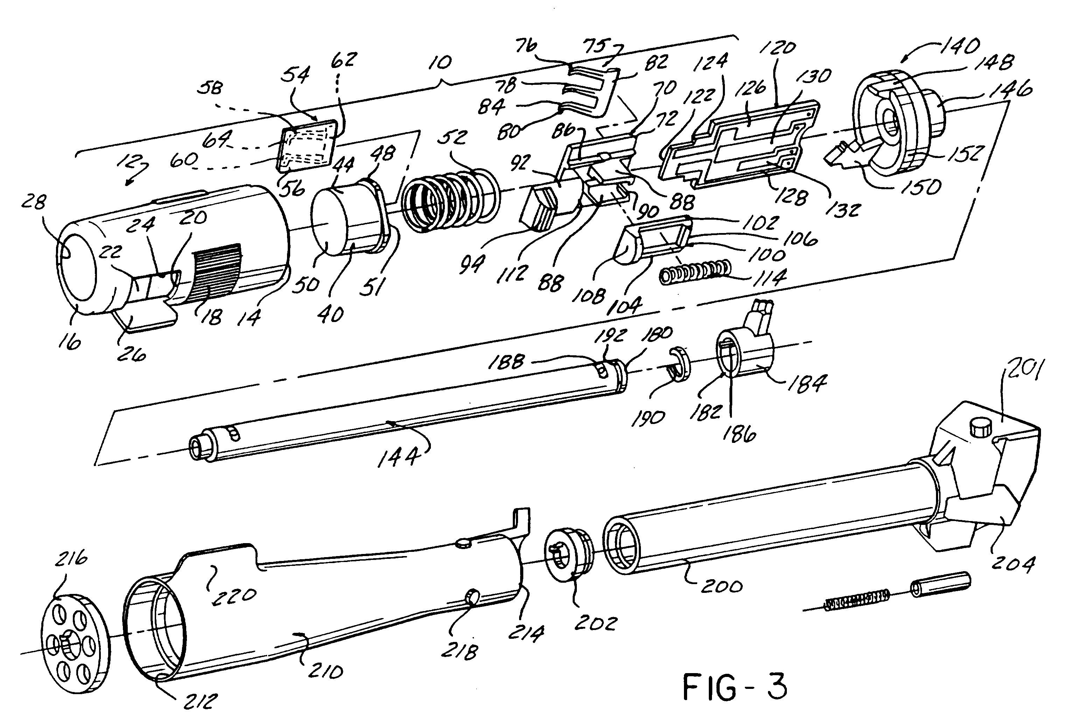

A slot 20 is formed in the side wall of the housing 12 adjacent the second end 16. A wall 22 is integrally formed with the side wall of the housing 12 but is inset in the slot 20 to close off a portion of the length of the slot 20 as shown in Figures 2 and 3. A first aperture 24 is formed between the end of the wall 22 and one edge of the slot 20 as shown in Figure 3. A protective tab 26 is integrally formed with the side wall of the housing 12 and extends radially outward from the housing 12 below the slot 20.

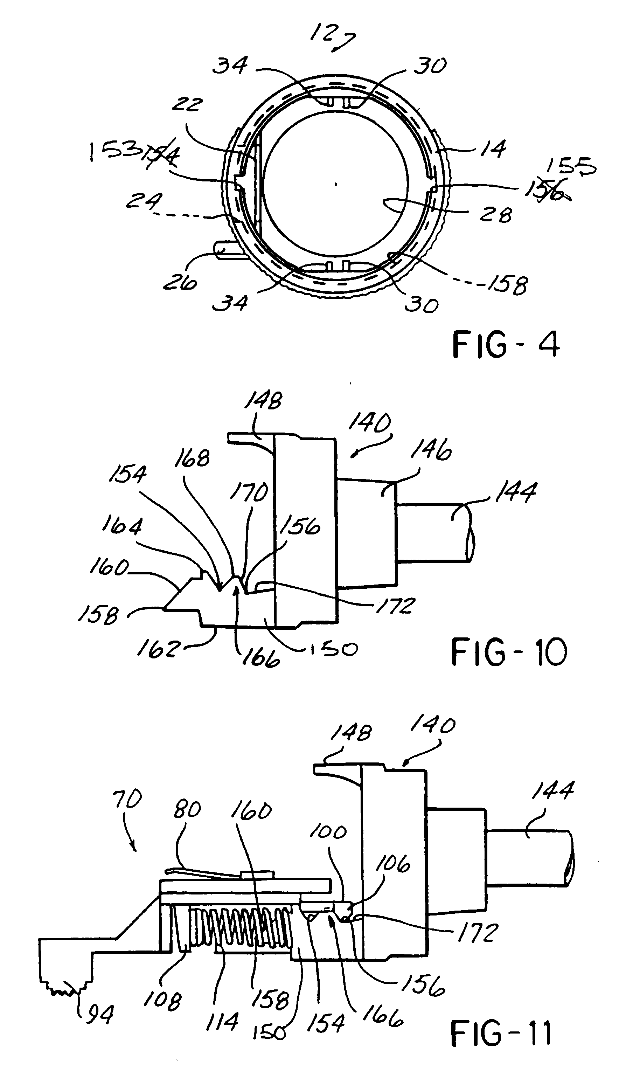

A second aperture 28 is formed in the second end 16 of the housing 12, the purpose of which will be described in greater detail hereafter. As shown in Figure 4, a plurality of internally formed pairs of ribs are formed in the housing 12 and provide mounting seats for various components of the stalk switch apparatus 10, as described hereafter. A first pair of ribs 30 are formed in a diametrically opposed manner in the housing 12. The ribs 30 extend substantially the entire length of the housing 12 from the first end 14 to the inner edge of an internal sleeve 32 which extends inward from the second end 16 of the housing 12 and is spaced at the inner end from the side wall of the housing 12 as shown in Figure 2. A second pair of diametrically opposed ribs 34 are also formed in the housing 12 and are circumferentially spaced from the first pair of ribs 30. The second pair of ribs 34 extends only partially from the inner edge of the sleeve 32 toward the first end 14 of the housing 12.

Further details of the housing 12 will be described hereafter in conjunction with other components of the steering column stalk switch assembly 10.

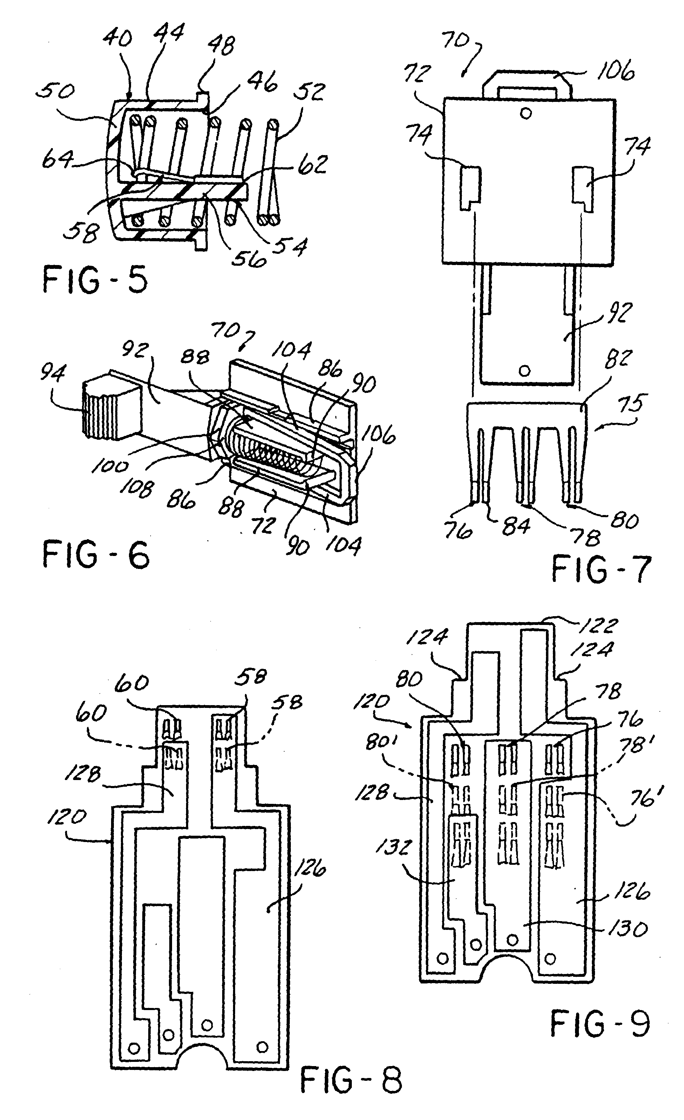

A button 40 is movably mounted in a bore 42 formed by the internal sleeve 32 in the second end 16 of the housing 12. As shown in Figure 5, the button 40 is in the form of a hollow cap-like member having a cylindrical side wall 44, an open first end 46 bounded by a radially outwardly extending flange 48 and a solid second end wall 50. A flat 51, shown in Figure 2, is formed in a limited angular portion of the annular flange 48 and slidably engages the inner portion of the wall 22 in the slot 20 in the housing 12 to key the position of the button 40 in a desired orientation within the housing 12.

A button biasing means, denoted generally by reference number 52, is mounted within the interior of the button 40 and extends partially outward from the first end 46 thereof. The button biasing means 52 is preferably in the form of a coil spring which seats at one end on the solid second end wall 50 of the housing 44 of the button 40.

A first electrical contactor 54 is fixedly mounted within the button housing 44 by any suitable means, such as, preferably, by heat staking. The first electrical contactor 54 includes a plastic base 56. A plurality of first electrical contacts, such as two electrical contacts 58 and 60, are mounted on the base 56. The contacts 58 and 60 are integrally connected at a first end 62 and each extends to a second end 64 in a direction toward the solid second end wall 50 of the button housing 44 in a resilient, cantilevered fashion. The contacts 58 and 60 are formed of any suitable electrically conductive material, such as copper. As shown in Figure 5, the second ends 64 of each of the contacts 58 and 60 are spaced from the base 56 of the first electrical contactor 54.

As shown in Figures 2, 3, 6 and 7, a carrier 70 is slidably mounted within the knob housing 12. The carrier 70 includes a generally rectangular or square base 72 formed of an insulating material, such as plastic. A pair of spaced clips 74 are formed on one surface of the base 72 of the carrier 70 and include a portion spaced from one surface of the base 72. The clips 74 are spaced apart on the base 72 and snapingly receive a second electrical contactor 75 therein.

As shown in Figures 2, 3 and 7, the second electrical contactor 75 includes a plurality of bifurcated, resiliently movable contacts, such as contacts 76, 78 and 80. Each of the contacts 76, 78 and 80 are integrally joined together at a first end 82. The first end 82 is mounted in the clips 74 in a snap-together fit to securely attach the second electrical contactor 75 to the base 72 of the carrier 70. The second ends 84 of each of the contacts 76, 78 and 80 extends from the common first end 82 upwardly and outwardly away from the clip 74 when the second contactor 75 is mounted on the base 72 of the carrier 70. It should be noted that the second ends 84 of each of the contacts 76, 78 and 80 of the second electrical contactor 75 extend toward the solid second end wall 50 of the button 40 in the same manner as the contacts 58 and 60 of the first electrical contactor 54.

An outer pair of side walls 86 are formed on the opposite surface of the base 72 of the carrier 70 as shown in Figures 3 and 6. The outer pair of side walls 86 have a relatively short height. An inner pair of side walls 88 are formed between the outer pair of side walls 86 and have a greater height so as to extend above the outer pair of side walls 86. The inner pair of side walls 88 are spaced apart and have an inwardly facing flange 90 formed at one end. The flanges 90 face each other and are spaced apart to define an aperture therethrough.

An L-shaped leg 92 is integrally formed with and extends above and longitudinally outward from one end of the base 72 of the carrier 70. An arcuate projection 94 is formed at one end of the leg 92. The leg 92 is configured to be slidably disposed in the slot 20 in the knob housing 12 in engagement with the outer surface of the wall 22 formed in the slot 20. In this mounting orientation, the projection 94 extends exteriorly of the slot 20 above the protective tab 26. The projection 94 forms a suitable surface for user engagement to slidably move the carrier 70 between a number of positions, as described hereafter.

A detent paw 100 is mounted on the carrier 70. The detent paw 100 has a generally rectangular shape formed of opposed side walls 102 and 104 which are mountable between the inner and outer pair of walls 86 and 88 on the carrier 70. The detent paw 100 also includes a first end 106 and a raised, opposed second end 108. A projection 110, shown in Figure 2, is formed on the raised second end 108 of the detent paw 100 and faces the first end 106.

The raised second end 108 is mounted between the ends of the inner walls 88 of the carrier 70 and a shoulder 112 formed by a portion of the leg 92 extending upward from the base 72 of the carrier 70.

Detent biasing means 114, preferably in the form of a coil spring, is mounted under a preload force on the carrier 70. The detent biasing means or spring 114 seats over the projection 110 on the raised second end 108 of the detent paw 100 and the inwardly extending flanges 90 on the inner walls 88 of the carrier 70. In this position, as shown in Figure 6, the spring 114 exerts a force against the second end 108 of the detent paw 100 to pivot the first end 106 of the detent paw 100 away from the base 72 of the carrier 70. However, the first end 106 of the detent paw 100 is capable of movement toward the base 72 of the carrier 70 during sliding movement of the carrier 70 as described hereafter.

In assembling the components described thus far, the first electrical contactor 54 is fixedly mounted in the button 40 by heat staking or other suitable means with the raised second ends 64 of the contacts 58 and 60 of the first electrical contactor 54 extending toward the second end or solid end wall 50 of the button 40. The button 40 is then slidably mounted in the knob housing 12 with the flat 51 on the button 40 aligned with the inner surface of the wall 22 in the slot 20 in the housing 12 to properly align the button 40 in the housing 12. In this position, the solid end wall 50 is accessible exteriorly through the second aperture 28 in the second end 16 of the housing 12, as shown in Figure 2.

The detent paw 100 is mounted on the carrier 70 such that the side walls 102 and 104 are disposed between the pairs of inner and outer walls 86 and 88 on the carrier 70. The biasing spring 114 is then inserted between the flanges 90 of the inner walls 88 and the raised second end 108 of the detent paw 100. The spring 114 is thus under a compressive force and biases the first end 106 of the detent paw 100 away from the base 72 of the carrier 70.

Next, the carrier 70 is slidably inserted into the housing 12 such that the surface of the base 72 on which the clips 74 are mounted slidably engages one side of the diametrically opposed ribs 34. The clips 74 are thus disposed between the ribs 34. The carrier 70 is inserted into the housing 12 to bring the projection 94 outward through the slot 20 with the leg 92 slidably engaging the inner wall 22, as shown in Figure 2. In this position, the carrier 70 is capable of sliding movement to the right, in the orientation shown in Figure 2 and 3, with the leg 92 completely covering the aperture 24 in the housing 12. Likewise, the inner wall 22 in the housing 12 cooperates with the leg 92 of the carrier 70 to close off the aperture 24 at all times to prevent the entry of foreign matter into the interior of the housing 12.

As shown in Figures 2 and 3, and in greater detail in Figures 8 and 9, the stalk switch assembly 10 also includes a circuit board 120 which is slidably inserted into the housing 12. The circuit board 120 is of conventional construction and is formed of a suitable electrically insulating material. A plurality of electrically conductive traces are formed on one surface of the circuit board 120 and are individually connected to electrical conductors 121, shown in Figure 1, which are in turn connected to various operating circuits of a cruise control device.

The circuit board 120 is mounted in the housing 12 between the diametrically opposed pairs of ribs 30 and 34. In this orientation, the exposed surface of the conductive traces face the contacts of the first and second electrical contactors 54 and 75 so as to be wiped by the contacts of the contactors 54 and 75 during movement of the button 40 and the carrier 70 as described hereafter. The first end 122 of the circuit board 120, which is inserted toward the second end wall 50 of the button 40, is formed with a necked down region which forms opposed shoulders 124. The shoulders 124 form a seat for the button biasing spring 52. As the circuit board 120 is held in a fixed position within the steering column stalk switch apparatus 10, as described hereafter, the biasing spring 52 normally biases the button 40 to a first position toward the second end 16 of the knob housing 12 as shown in Figure 2. However, user exerted force on the solid end wall 50 of the button 40 is capable of overcoming the force of the biasing spring 52 and move the button 40 to a second position in which the contacts of the first electrical contactor 54 mounted thereon engage certain conductive tracings on the circuit board 120.

As shown in Figure 8, in the normal first or off position shown in Figure 2, the contacts 58 and 60 of the first electrical contactor 54 mounted in the button 40 engage the portions of the circuit board 120. In this first position, the first contacts 58 engage a first conductive trace 126 on the circuit board 120. The second electrical contacts 60 engage an insulating portion of the circuit board 120 such that no electrical power flows between the contacts 58 and 60. However, movement of the button 40 to the second position brings the first and second contacts 58 and 60 of the first electrical contactor 54 carried thereon to a second position shown in phantom in Figure 8. In this position, the first contacts 58 remain in engagement with the conductive trace 126. The second contacts 60, in this second position, engage a second conductive trace 128 thereby forming a circuit between the contacts 58 and 60 to supply electrical power to the set speed circuit of the vehicle cruise control device. Release of the button 40 will enable the biasing spring 52 to return the button 40 to the normal, first position shown in Figure 2 in which the electrical circuit between the contacts 58 and 60 opens.

It should be noted that the conductive tracings 126 and 128 are disposed in a predetermined length, start point from the first end 122 and timed relationship with respect to the position of the button 40 so as to engage the contacts 58 and 60 in each distinct first and second position of the button 40 as described above.

Figure 9 depicts the operation of the contacts 76, 78 and 80 of the second electrical contactor 75 mounted on the carrier 70 in various operative states depending upon the position of the carrier 70. In a first position of the carrier 70, as depicted in Figure 2, the electrical contacts 76, 78 and 80 will be oriented as shown in Figure 9. The first electrical contacts 76 engage an insulating portion of the circuit board 120. The second electrical contacts are disposed in engagement with a conductive trace 130 on the circuit board 120. The third electrical contacts 80 are also disposed in engagement with an insulating portion of the circuit board 120. This position of the contacts 76, 78 and 80 and the carrier 70 is defined in the exemplary embodiment as an "off" position of the vehicle cruise control device.

Movement of the carrier 70 from the first position shown in Figure 2 to a second position, as described hereafter, brings the contacts 76, 78 and 80 to the position shown in phantom in Figure 9 and depicted by reference numerals 76', 78' and 80'. In this position, the first and second electrical contacts 76 and 78 engage the conductive traces 126 and 130, respectively, on the circuit board 120 to form a closed circuit therebetween. The third electrical contact 80' remains in engagement with an insulating portion of the circuit board 120. This position is defined, in the exemplary embodiment, as the "on" position of the vehicle cruise control.

Further movement of the carrier 70 to the right in the orientation shown in Figure 2 brings the contacts 76, 78 and 80 to a third position shown in phantom in Figure 9. In this position, each of the contacts 76, 78 and 80 is respectively disposed in contact with the conductive traces 126, 130 and 132 on the circuit board 120. This position is defined, in the exemplary embodiment, as the "resume set speed" position of the vehicle cruise control. The carrier 70 is capable of movement in an opposite direction to the second or first positions at the user's preference.

A hub 140 is mounted on one end 142 of a shaft 144. The hub 140, which is preferably formed of molded plastic, has a cylindrical first end 146 with an internal bore and a key slot which is mountable over the first end 142 of the shaft 144. After the hub 140 is mounted on the first end 142 of the shaft 144, the outer end portion of the first end 142 of the shaft 144 is flared outward to secure the hub 140 in a fixed position on the shaft 144.

It should be noted that Figure 3 depicts the hub 140 and the shaft 144 90° out of their normal mounting position for reasons of clarity. The hub 140 also includes a pair of spaced longitudinally extending arms 148 and 150 which extend longitudinally from a raised annular end flange 152 on a second end of the hub 140. The arms 148 and 150 are devised to slidably engage key slots 153 and 155, respectively, extending inward from the first end 14 of the knob housing 12, as shown in Figure 4. This orients the hub 140 in a predetermined position with respect to the housing 12. As further shown in Figure 4, the first end 14 of the knob housing 12 has a slight, radially inward taper extending from the first end 14. An enlarged annular recess 158 is formed adjacent the taper and receives the raised annular flange 152 on the hub 140 in a snap-together fit to permanently secure the hub 140 to the knob housing 12.

The second arm 150 is formed with first and second detents 154 and 156, respectively, as more clearly shown in Figures 10 and 11. Specifically, the arm 150 has an outer end 158 from which an inclined ramp 160 extends at an acute angle from an outer peripheral portion or base 162 of the arm 150. A raised projection 164 is formed at the top end of the ramp 160. A recess or first detent 154 is formed by an angular surface extending from the projection 164 toward the base 162 of the arm 150. This recess or first detent position 154 defines the "off" position of the vehicle cruise control when the first end 106 of the detent paw 100 is disposed therein, as shown in Figures 2 and 10. A second projection 166 is also formed in the arm 150. The second projection 166 is spaced from the first projection 164 and is formed with opposed angularly inclined ramp surfaces 168 and 170, respectively. The second ramp surface 170 terminates in a second detent position 156 as shown in Figure 10. When the first end 106 of the detent paw 100 is disposed in the second detent position 156, the vehicle cruise control is energized or in the "on" position through the second contacts 76 and 78. In this position, inward movement of the button 40 will set a predetermined vehicle speed for the cruise control device. A further inclined ramp surface 172 extends angularly upward from the second detent position or recess 156 away from the base 152. This ramp surface 172 defines a momentary "resume set speed" position for the vehicle cruise control.

To complete the assembly of the stalk switch apparatus 10, after the circuit board 120 has been slidably inserted into the knob housing 12, as described above, the hub 140, having previously been fixedly mounted on the first end 142 of the shaft 144, will be urged into a snap fit with the first end 14 of the knob housing 12, as also described above. This brings the second end of the hub 140 into fixed engagement with one end of the circuit board 120 so as to fixedly dispose the circuit board 120 in a non-movable position within the stalk switch apparatus 10. During the sliding insertion of the hub 140 into the knob housing 12, the first end 106 of the detent paw 100 will slidably engage the ramp 160 and will pivot from its normal position toward the base 72 of the carrier 70 sufficient to clear the projection 164 and seat in the first detent position 154 in the arm 150 on the hub 140.

In use, movement of the carrier 70 to the right, in the orientation shown in Figure 2, will cause the first end 106 of the detent paw 100 to move over the projection 166 into the second detent position 156 with a positive stop. Further, movement of the carrier 70 to the right will cause the detent paw 100 to move along the ramp surface 172 to bring the contacts 76, 78 and 80 to the third position shown in phantom in Figure 9 which activates the resume set speed circuit of the vehicle cruise control.

As shown in Figure 11, during such movement of the first end 106 of the detent paw 100 along the ramp 172, the first end 158 and end ramp 160 of the arm 150 on the hub 140 slides within the detent biasing spring 114 contained within the inner side walls 90 on the carrier 70 and further compresses the coil spring 114. In this manner, release of the projection 94 on the carrier 70 will enable the coil spring 114 to urge the carrier 70 to the left in the orientation shown in Figure 11 away from the first end 158 of the arm 150 on the hub 140 to bring the first end 106 of the detent paw 100 back to the second detent position 156. This retains the cruise control in the "on" position. At any time, the user may exert a leftward movement on the projection 94 of the carrier 70 to bring the first end 106 of the detent paw 100 over the projection 166 and back to the first detent position 154, shown in Figure 10, to deactivate or turn off the vehicle cruise control.

The profiles, ramp angles and heights of the first and second projections, the spring force of the detent spring 114 and the pivot point of the detent paw 100 may be tailored to provide any desired sliding movement and tactile feel for the operation of the carrier 70. Further, these characteristics are chosen so that a positive return of the detent paw 100 from the ramp 172 to the second detent position 166 is insured.

The shaft 144 preferably comprises a hollow cylinder having a second end 180 opposed from the first end 142. A gear means 182 is fixedly mounted on the second end 180 of the lever 144. The gear means 182 by way of example includes an annular collar 184 having an internal key slot 186 which slidably engages a key projection 188 formed on the shaft 144, adjacent the second end 180 thereof. The gear means 182 includes a plurality of radially extending, circumferentially spaced teeth which are designed to engage a driven gear, not shown, mounted in a switch housing attached to the stalk switch assembly 10. The gear means 182 drives the driven gear which, in turn, moves a contact attached thereto between engagement with various fixed contacts mounted in the switch housing to selectively control the operation of an electrical device, such as a vehicle windshield wiper assembly between off, on and a plurality of discrete, intermittent operating speeds depending upon the degree and direction of rotation of the housing 12. By way of example only, the gear means 182 comprises a non-involute gear disclosed in co-pending United States Patent Application Serial No. 07/887,064, filed May 22, 1992, in the name of Daniel J. DuRocher, one of the present Applicants, and entitled "NON-INVOLUTE GEAR", the contents of which are incorporated herein by reference. A C-ring 190 is slidably engageable in an annular recess 192 formed on the shaft 144, adjacent the second end 180 thereof, to retain the gear means 182 on the shaft 144.

As shown in Figures 2 and 3, the second end 180 of the shaft 144 is pivotally connected to a switch housing 201 for pivotal movement in at least one of two mutually separate planes, i.e., generally vertical and horizontal. The pivot connections used to pivotally attach the lever 144 to the switch housing 201 and the various operators moved by such pivotal movement of the entire stalk switch apparatus 10 in two mutually exclusive planes can be had by referring to United States Patent No. 5,049,706, filed in the name of Daniel J. DuRocher, one of the present Applicants, and entitled "MULTIFUNCTION STEERING COLUMN SWITCH", the contents of which are incorporated herein by reference.

As shown in Figures 2 and 3, a lever 200 having a generally hollow, elongated cylindrical shape is mounted concentrically about the shaft 144. A bearing 202 is mounted in one end of the lever 200, preferably by a snap fit, to rotatably mount the shaft 144 within the lever 200. The opposite end of the lever 200 has an outwardly extending flange 204 with an internal bore 206 which receives a spring-biased plunger.

Finally, to complete the steering column stalk switch apparatus 10, an outer washer paddle housing 210 having a generally cylindrical shape with a larger diameter first end 212, and a side wall which tapers to a smaller diameter, opposed second end 214, is rotatably disposed over the lever 200. The housing 210 receives a bearing 216 in the first end 212 through which the shaft 144 rotatably extends. The second end 214 of the housing 210 rotatably rests on the exterior surface of the lever 200. A plurality of radially extending, circumferentially spaced projections 218 are formed on the exterior surface of the housing 210 for mounting a rubber boot around the switch assembly thereto in a conventional manner. A paddle arm 220 is integrally formed with and extends radially outward from the first end 212 of the housing 210 to provide a convenient gripping surface for rotating the housing 210.

In summary, there has been disclosed a unique steering column mounted stalk switch apparatus which has a simplified construction over previously devised stalk switches. The present stalk switch apparatus presents a positive tactile feel and smooth movement of the various sliding members and movable button between various positions. Furthermore, the stalk switch apparatus is designed to positively prevent any sticking of the sliding member in the temporary resume set speed position of a vehicle cruise control device. There has also been disclosed a unique method of manufacturing a steering column mounted stalk switch apparatus which provides a simplified construction over previously devised methods of manufacturing stalk switches. The present method provides a stalk switch apparatus which presents a positive tactile feel and smooth movement of the various sliding member and movable button between various positions.

## Claims

1. A steering column stalk switch apparatus having a shaft (144) with first and second opposed ends (142, 180), first and second co-axially arranged housing portions (12, 210) independently coaxially rotatable with respect to each other and co-acting to form an elongated substantially closed stalk switch housing, first operating means (182) controlled by rotation of the first housing portion (12) for operating a first switch means, and second operating means (204) controlled by rotation of the second housing portion (210) for operating a second switch means, characterized by:
means (140) for connecting the first end portion of the shaft (144) to the first housing portion (12) for rotation of the shaft with rotation of the first housing portion;
a lever (200) pivotally extending from a switch housing (201), the lever (200) extending at least partially through the second housing portion (210) and receiving the shaft (144) therethrough; and
means for forming a first bearing surface (202) between the lever (200) and the shaft (144) for rotation of the shaft relative to the lever, and for forming a second bearing surface (216) between the shaft (144) and the second housing (210) for rotation of the shaft and the second housing relative to each other.

2. The steering column stalk switch apparatus of claim 1 wherein:
the shaft (144) and the second housing portion (210) are independently rotatable with respect to each other about the lever (200).

3. The steering column stalk switch apparatus of claim 1 wherein the means for forming the first bearing surface (202) comprises:
first bearing means (202), carried with the lever (200), for co-axially and rotatably supporting the second end portion of the shaft (144) within the lever (200).

4. The steering column stalk switch apparatus of claim 3 wherein the means for forming the second bearing surface (216) comprises:
second bearing means (216) engaged with the shaft (144) and the second housing portion (210), for co-axially and rotatably supporting the shaft (144) within the second housing portion (210).

5. The steering column stalk switch apparatus of claim 4 wherein:
the first bearing means (202) further includes means, engaged between the lever (200) and the shaft (144), for co-axially and rotatably supporting an intermediate portion of the shaft (144) with respect to the lever (200).

6. The steering column stalk switch apparatus of claim 4 wherein the first and second bearing means (202, 216) comprise:
a first bearing (202) mountable in an end of the lever (200) and rotatably receiving the shaft (144) therethrough; and
a second bearing (216) engaged between the second housing portion (210) and the shaft (144) for enabling independent rotation of the shaft (144) and the second housing portion (210) with respect to each other.

7. The steering column stalk switch apparatus of claim 4 wherein:
the second bearing means (216) enables independent rotation of each of the shaft (144) and the second housing portion (210) with respect to each other and the lever (200).

8. The steering column stalk switch apparatus of claim 1 wherein the connecting means comprises:
means (140), carried with the first housing portion (12), for fixedly receiving the first end portion of the shaft (144) in the first housing portion (12).

9. The steering column stalk switch apparatus of claim 1 further comprising:
the first end of the shaft (144) pivotally attached to a switch housing (210);
a hub (140) fixedly mounted on the second end of the shaft (144),
the housing portion (12) having first and second ends, the hub (140) fixedly engaging the first end of the housing portion (12) ;
a circuit board (120) disposed in the housing (12) and fixedly engaging the hub (140), the circuit board (120) including a plurality of electrically conductive tracings (126, 128) disposed at timed intervals, electrical conductors (122) connected to the conductive tracings and extending exteriorly of the shaft (144);
a first aperture (28) formed in the second end (16) of the housing (12);
a button (40) mounted in the housing (12) and movable in the first end of the housing between first and second positions;
button biasing means (52), mounted in the housing (12) and seated between the circuit board (120) and the button (40), for biasing the button (40) to the first position;
a plurality of first electrical contacts (58, 60) mounted in the button (40) and engaging certain conductive tracings (126, 128) on the circuit board (120) when the button (40) is in the second position to close an electrical circuit connected to the certain conductive tracings (126, 128);
a carrier (70) having first and second opposed ends (106, 108), the carrier (70) slidably mounted in the housing (12);
a radially outwardly extending projection (94) formed on the second end (108) of the carrier (70) and slidably extending through a side wall aperture (24) formed in the housing (12) adjacent the second end of the housing;
a detent paw (100) having first and second opposed ends (106, 108) mounted on the carrier (70) for movement between first and second positions;
means (114), mounted on the carrier (70) and engaging the second end of the detent paw (100), for biasing the detent paw (100) to the first position; and
an arm (150) formed on the hub (140) and extending axially therefrom, first and second spaced detents (154, 156) formed on the arm (150);
the arm (150) and the first end (106) of the detent paw (100) being axially aligned such that the first end (106) of the detent paw (100) is slidably movable between the first and second detents (154, 156) upon sliding movement of the carrier (70);
the detent paw biasing means (114) engaging the arm (150) when the carrier (70) is urged to a position in which the first end (106) of the detent paw (100) extends beyond the second detent (156) and biasing the carrier (70) to the second detent (156); and
the lever (200) being contiguous with an exterior surface of the housing (12).

10. The stalk switch apparatus of Claim 9 wherein:
the arm (150) includes a surface (170) extending angularly from the second detent (156).

11. The stalk switch apparatus of Claim 9 further comprising:
a plurality of second electrical contacts (76, 78, 80) mounted on the carrier (70), each of the second electrical contacts (76, 78, 80) having resilient arms cantilevered from a first end (62) attached to the carrier (70) and movably disposed away from the carrier (70).

12. The stalk switch apparatus of Claim 11 further comprising:
means (74), formed on the carrier (70), for receiving a base (82) carrying the second electrical contacts (76, 78, 80) in a snap fit.

13. The stalk switch apparatus of Claim 11 wherein the second ends of the plurality of second electrical contacts (76, 78, 80) extend toward the second end of the button (40).

14. The stalk switch apparatus of Claim 9 wherein:
the plurality of first electrical contacts (58, 60) are mounted on a base (56) fixedly attached to the button (40);
each of the plurality of first electrical contacts (58, 60) having resilient arms cantilevered from a first end (62) affixed to the base (56) to a second end (64) movably disposed away from the base.

15. The stalk switch apparatus of Claim 11 wherein:
the circuit board (120) includes a plurality of first electrically conductive tracings (126, 128) arranged in a first group slidably engaged by the first electrical contacts (58, 60);
each of the first group of electrically conductive tracings (126, 128) having different starting points from one end of the circuit board (120) for selective engagement with selected ones of the first electrical contacts (56, 58) as the first electrical contacts are moved with the button (40) between the first and second positions of the button (40); and
the circuit board (120) including a plurality of second electrically conductive tracings (130, 132) arranged in a second group slidably engaged by the plurality of second electrical contacts (76, 78, 80);
each of the second group of second electrically conductive tracings (130, 132) having different starting points from one end of the circuit board (120) for selective engagement with one of the plurality of second contacts (76, 78, 80) as the second contacts are moved with the carrier (70).

16. The stalk switch apparatus of Claim 9 wherein the arm (150) includes:
a base wall (162);
a first end connected to the hub (140);
a second end (158) spaced from the first end and extending axially outward from the hub (140);
a first projection (160, 164) extending from the second end (158) of the arm (150) in a predetermined profile from the base wall (162);
a second projection (166) formed on the arm (150) and spaced from the first projection (164) and extending in a second profile, the first detent (154) being formed between the first and second projections (164, 166); and
an angular ramp (172) extending from the terminus of the second projection (166) angularly from the base wall (162) at a predetermined selectable angle, the second detent (156) being formed between the second projection (166) and the angular ramp (172).

17. The stalk switch apparatus of Claim 16 wherein the carrier (70) further comprises:
a base (72);
a pair of spaced walls (86, 88) formed on the base (72), an inward extending flange (90) formed on one end of each wall (88) and facing and spaced from the flange (90) on the opposed wall (86) to define an aperture through the walls (86, 88);
the detent paw (100) mounted about the walls (86, 88) and on the base (72) of the carrier (70), the first end (106) of the detent paw (100) disposed adjacent to and outside of the aperture between the flanges (90) on the wall (88); and
the means for biasing the detent paw (100) including:
a coil spring (114) seated between the flanges (90) on the walls (86, 88) of the carrier (70) and the second end of the detent paw (108).

18. The stalk switch apparatus of Claim 17 further comprising:
the coil spring (114) being aligned with the arm (150) on the hub (140) so as to be compressed when the carrier (70) is urged to a position moving the first end (106) of the detent paw (100) along the angular ramp (172) on the arm (150) of the hub (140).

19. The stalk switch apparatus of Claim 9 wherein:
the button biasing means (52) urges the circuit board (120) into engagement with the hub (140).

20. The stalk switch apparatus of Claim 9 further comprising:
first and second pairs (30, 34) of diametrically opposed ribs formed internally in the housing (12);
the circuit board (120) being supported between the first and second pairs (30, 34) of ribs; and
the carrier (70) being supported between one of the first and second pairs of ribs (30, 34) and the housing (12).

## Patentansprüche

1. Ein Lenksäulenhebelschaltapparat, der eine Welle (144) mit einem ersten und einem zweiten gegenüberliegenden Ende (142, 180) hat, ersten und zweiten koaxial angeordneten Gehäuseteilen (12, 210), die voneinander unabhängig koaxial drehbar sind und zusammen ein langgestrecktes, im Wesentlichen geschlossenes Hebelschaltgehäuse bilden, ein erstes Betriebselement (182), das durch Drehung des ersten Gehäuseteils (12) zur Betätigung eines ersten Schaltelements gesteuert wird, und ein zweites Betriebselement (204), das durch Drehung des zweiten Gehäuseteils (210) zur Betätigung eines zweiten Schaltelements gesteuert wird, gekennzeichnet durch:
Mittel (140), zur Verbindung des ersten Endbereichs der Welle (144) mit dem ersten Gehäuseteil (12) zur Drehung der Welle bei Drehung des ersten Gehäusesteils;
einen Hebel (200), der sich schwenkbar von einem Schaltgehäuse (201) erstreckt, wobei der Hebel (200) sich zumindest teilweise durch den zweiten Gehäuseteil (210) erstreckt und die Welle (144) dadurch aufnimmt; und
Mittel zur Bildung einer ersten Lagerfläche (202) zwischen dem Hebel (200) und der Welle (144) zur Drehung der Welle relativ zum Hebel, und zur Bildung einer zweiten Lagerfläche (216) zwischen der Welle (144) und dem zweiten Gehäuse (210) zur Drehung der Welle und des zweiten Gehäuses relativ zueinander.

2. Lenksäulenhebelschaltapparat nach Patentanspruch 1, wobei:
die Welle (144) und das zweite Gehäuseteil (210) unabhängig voneinander über den Hebel (200) drehbar sind.

3. Lenksäulenhebelschaltapparat nach Patentanspruch 1, wobei das Mittel zur Bildung der ersten Lagerfläche (202) enthält:
ein erstes Lagerelement (202), das mit dem Hebel (200) getragen wird, zur koaxialen und drehbaren Stützung des zweiten Endbereichs der Welle (144) im Inneren des Hebels (200).

4. Lenksäulenhebelschaltapparat nach Patentanspruch 3, wobei das Mittel für die Bildung der zweiten Lagerfläche (216) enthält:
ein zweites Lagerelement (216), das in Eingriff mit der Welle (144) und dem zweiten Gehäuseteil (210) steht, zur koaxialen und drehbaren Lagerung der Welle (144) im Inneren des zweiten Gehäuseteils (210).

5. Lenksäulenhebelschaltapparat nach Patentanspruch 4, wobei:
das erste Lagerelement (202) weiterhin Elemente enthält, die im Eingriff zwischen dem Hebel (200) und der Welle (144) platziert, zur koaxialen und drehbaren Lagerung eines mittleren Bereichs der Welle (144) im Verhältnis zum Hebel (200) dienen.

6. Lenksäulenhebelschaltapparat nach Patentanspruch 4, wobei das erste und das zweite Lagerelement (202, 216) enthalten:
ein erstes Lager (202), das an einem Ende des Hebels (200) zu befestigen ist und durch das die Welle (144) drehbar gelagert ist; und
ein zweites Lager (216), das zwischen dem zweiten Gehäuseteil (210) und der Welle (144) im Eingriff ist, um eine voneinander unabhängige Drehung der Welle (144) und des zweiten Gehäuseteils (210) zu ermöglichen.

7. Lenksäulenhebelschaltapparat nach Patentanspruch 4, wobei:
das zweite Lagerelement (216) eine voneinander unabhängige Drehung der Welle (144) und des zweiten Gehäuseteils (210), sowie in Bezug auf den Hebel (200) ermöglicht.

8. Lenksäulenhebelschaltapparat nach Patentanspruch 1, wobei das Verbindungselement enthält:
ein Mittel (140), das von dem ersten Gehäuseteil (12) getragen wird, zur festen Aufnahme des ersten Endbereichs der Welle (144) im ersten Gehäuseteil (12).

9. Lenksäulenhebelschaltapparat nach Patentanspruch 1, der weiterhin enthält:
daß das erste Ende der Welle (144), schwenkbar am Schaltgehäuse (210) angebracht ist;
eine Nabe (140), die fest am zweiten Ende der Welle (144) montiert ist,
das Gehäuseteil (12) mit einem ersten und einem zweiten Ende, die Nabe (140) ist in festem Eingriff mit dem ersten Ende des Gehäuseteils (12);
eine im Gehäuse (12) angeordnete Leiterplatte (120), die fest im Eingriff mit der Nabe (140) ist; die Leiterplatte (120) enthält eine Vielzahl von elektrischen Leiterbahnen (126, 128), die in zeitlich abgestimmten Intervallen angeordnet sind, elektrische Leiter (122), die mit den Leiterbahnen verbunden sind und von der Welle (144) nach außen ragen;
eine erste Öffnung (28), die im zweiten Ende (16) des Gehäuses (12) gebildet ist;
eine Taste (40), die im Gehäuse (12) angebracht ist und im ersten Ende des Gehäuses zwischen einer ersten und einer zweiten Position beweglich ist;
ein Tastenvorspannelement (52), das im Gehäuse (12) montiert ist und zwischen der Leiterplatte (12) und der Taste (40) sitzt, zur Vorspannung der Taste (40) in die erste Position;
eine Vielzahl von ersten elektrischen Kontakten (58, 60), die in der Taste (40) montiert sind und bestimmte Leiterbahnen (126, 128) auf der Leiterplatte (120) schalten, wenn die Taste (40) in der zweiten Position ist, um einen elektrischen Schaltkreis zu schließen, der mit den bestimmten Leiterbahnen (126, 128) verbunden ist;
einen Träger (70), der ein erstes und ein gegenüberliegendes zweites Ende (106, 108) hat, wobei der Träger (70) verschiebbar im Gehäuse (12) angebracht ist;
einen radial nach außen ragenden Vorsprung (94), der am zweiten Ende (108) des Trägers (70) gebildet wird und verschiebbar durch eine Seitenwand-Öffnung (24) ragt, die im Gehäuse (12) angrenzend an das zweite Ende des Gehäuses gebildet ist;
eine Sperrklinke (100), die ein erstes und ein gegenüberliegendes zweites Ende (106, 108) hat und auf dem Träger (70) zur Bewegung zwischen einer ersten und einer zweiten Position angebracht ist;
ein Mittel (114), das auf dem Träger (70) angebracht ist und im Eingriff mit dem zweiten Ende der Sperrklinke (100) steht, zur Vorspannung der Sperrklinke (100) in die erste Position; und
einen Arm (150), der auf der Nabe (140) gebildet wird und sich axial davon erstreckt, mit einer ersten und einer zweiten Arretierung (154, 156) in bestimmten Abstand auf dem Arm (150);
der Arm (150) und das erste Ende (106) der Sperrklinke (100) sind axial ausgerichtet, so dass das erste Ende (106) der Sperrklinke (100) bei schiebender Bewegung des Trägers (70) zwischen der ersten und der zweiten Arretierung (154, 156) verschiebbar beweglich ist;
das Sperrklinkenvorspannelement (114), das im Eingriff mit dem Arm (150) ist, wenn der Träger (70) in eine Position gedrückt wird, in der das erste Ende (106) der Sperrklinke (100) über die zweite Arretierung (156) hinausragt, und den Träger (70) in die zweite Arretierung (156) zurückschiebt; und
der Hebel (200), der an einer äußeren Oberfläche des Gehäuses (12) anliegt.

10. Hebelschaltapparat nach Patentanspruch 9, wobei:
der Arm (150) eine Oberfläche (170) enthält, die sich winkelförmig von der zweiten Arretierung (156) erstreckt.

11. Hebelschaltapparat nach Patentanspruch 9, der weiterhin enthält:
eine Vielzahl von zweiten elektrischen Kontakten (76, 78, 80), die auf dem Träger (70) angebracht sind, jeder der zweiten elektrischen Kontakte (76, 78, 80) mit einem federnden Arm, der freitragend an einem ersten Ende (62) befestigt ist, das am Träger (70) sitzt und beweglich vom Träger (70) wegweisend angeordnet ist.

12. Hebelschaltapparat nach Patentanspruch 11, der weiterhin enthält:
Mittel (74), auf dem Träger (70) gebildet, zur Aufnahme einer Grundfläche (82), die die zweiten elektrischen Kontakte (76, 78, 80) mittels eines Zusammenschnappmechanismus trägt.

13. Hebelschaltapparat nach Patentanspruch 11, wobei die zweiten Enden der Vielzahl der zweiten elektrischen Kontakte (76, 78, 80) zum zweiten Ende der Taste (40) ragen.

14. Hebelschaltapparat nach Patentanspruch 9, wobei:
die Vielzahl der ersten elektrischen Kontakte (58, 60) auf einer Grundfläche (56) montiert ist, die fest an der Taste (40) befestigt ist;
jeder der Vielzahl von ersten elektrischen Kontakten (58, 60) federnde Arme hat, die freitragend von einem ersten Ende (62), das an der Grundfläche (56) befestigt ist, zu einem zweiten Ende (64) ragen, das beweglich von der Grundfläche wegweisend angeordnet ist.

15. Hebelschaltapparat nach Patentanspruch 11, wobei:
die Leiterplatte (120) eine Vielzahl von ersten elektrischen Leiterbahnen (126, 128) enthält, die in einer ersten Gruppe angeordnet sind, und die durch Schieben von den ersten elektrischen Kontakten (58, 60) in Kontakt gebracht werden;
jede der ersten Gruppe von elektrischen Leiterbahnen (126, 128) verschiedene Ausgangspunkte von einem Ende der Leiterplatte (120) zu selektivem Kontakt mit ausgewählten der ersten elektrischen Kontakte (56, 58) hat, wenn die ersten elektrischen Kontakte mit der Taste (40) zwischen der ersten und zweiten Position der Taste (40) bewegt werden; und
die Leiterplatte (120) eine Vielzahl von zweiten elektrischen Leiterbahnen (130, 132) enthält, die in einer zweiten Gruppe angeordnet sind und durch eine Vielzahl von zweiten elektrischen Kontakten (76, 78, 80) geschaltet werden;
jede der zweiten Gruppe von elektrischen Leiterbahnen (130, 132) verschiedene Ausgangspunkte von einem Ende der Leiterplatte (120) zu selektivem Kontakt mit einem der Vielzahl von zweiten Kontakten (76, 78, 80) hat, wenn die zweiten Kontakte mit dem Träger (70) bewegt werden.

16. Hebelschaltapparat nach Patentanspruch 9, wobei der Arm (150) enthält:
eine Grundfläche (162);
ein erstes, mit der Nabe (140) verbundenes Ende;
ein zweites Ende (158) in bestimmtem Abstand vom ersten Ende, das sich axial von der Nabe (140) erstreckt;
einen ersten Vorsprung (160, 164), der vom zweiten Ende (158) des Arms (150) in einem vorherbestimmten Profil von der Grundfläche (162) herausragt;
einen zweiten Vorsprung (166), der auf dem Arm (150) in bestimmtem Abstand vom ersten Vorsprung (164) gebildet wird und in einem zweiten Profil hervorragt, wobei die erste Arretierung (154) zwischen dem ersten und dem zweiten Vorsprung (164, 166) gebildet wird; und
eine Schräge (172), die sich vom Ende des zweiten Vorsprungs (166) winkelförmig von der Grundfläche (162) bei einem vorherbestimmten, wählbaren Winkel erstreckt, wobei die zweite Arretierung (156) zwischen dem zweiten Vorsprung (166) und der Schräge (172) gebildet wird.

17. Hebelschaltapparat nach Patentanspruch 16, wobei der Träger (70) weiterhin enthält:
eine Grundplatte (72);
ein Paar Wände (86, 88), die in bestimmtem Abstand auf der Grundplatte gebildet sind, ein nach innen weisender Bund (90), der an einem Ende jeder Wand (88) gebildet ist und in bestimmtem Abstand dem Bund (90) auf der gegenüberliegenden Wand (86) gegenübersteht, wodurch durch die Wände (86, 88) eine Öffnung abgegrenzt wird;
die Sperrklinke (100), die um die Wände (86, 88) und auf der Grundplatte (72) des Trägers (70) befestigt ist, wobei das erste Ende (106) der Sperrklinke (100) angrenzend zu und außerhalb der Öffnung zwischen den Bünden (90) auf der Wand (88) angeordnet ist; und
das Element zur Vorspannung der Sperrklinke (100), einschließlich:
einer Spiralfeder (144), die zwischen den Bünden (90) auf den Wänden (86, 88) des Trägers (70) und dem zweiten Ende der Sperrklinke (108) sitzt.

18. Hebelschaltapparat nach Patentanspruch 17, der weiterhin enthält:
die Spiralfeder (114), die mit dem Arm (150) auf der Nabe (140) so ausgerichtet ist, dass sie zusammengedrückt wird, wenn der Träger (70) durch Bewegung des ersten Endes (106) der Sperrklinke (100) entlang der Schräge (172) auf dem Arm (150) der Nabe (140) in eine Position gepresst wird.

19. Hebelschaltapparat nach Patentanspruch 9, wobei:
das Tastenvorspannelement (52) die Leiterplatte (120) in Eingriff mit der Nabe (140) presst.

20. Hebelschaltapparat nach Patentanspruch 9, der weiterhin enthält:
ein erstes und ein zweites Paar (30, 34) von diametral gegenüberliegenden Rippen, die im Inneren des Gehäuses (12) gebildet sind;
die Leiterplatte (120), die zwischen dem ersten und dem zweiten Rippenpaar (30, 34) gehalten wird; und
den Träger (70), der zwischen einem von dem ersten und zweiten Rippenpaar (30, 34) und dem Gehäuse (12) gehalten wird.

## Revendications

1. Ensemble de commutateur à fléau pour colonne de direction, comprenant une tige (144) avec une première et une deuxième extrémité opposées (142, 180), une première et une deuxième partie de boîtier (12, 210) agencées coaxialement et capables de tourner coaxialement indépendamment l'une par rapport à l'autre, et coopérant pour former un boîtier de commutateur à fléau allongé sensiblement fermé, des premiers moyens d'actionnement (182) commandés par la rotation de la première partie de boîtier (12) pour actionner un premier commutateur, et des deuxièmes moyens d'actionnement (204) commandés par la rotation de la deuxième partie de boîtier (210) pour actionner un deuxième commutateur, caractérisé par :
- des moyens (140) pour connecter la première partie terminale de la tige (144) à la première partie de boîtier (12) en vue d'une rotation de la tige avec une rotation de la première partie de boîtier ;
- un levier (200) qui s'étend en pivotement depuis un boîtier de commutateur (201), le levier (200) s'étendant au moins partiellement à travers la deuxième partie de boîtier (210) et recevant la tige (144) à travers lui-même ; et
- des moyens pour former une première surface de portée (202) entre le levier (200) et la tige (144) en vue d'une rotation de la tige par rapport au levier, et pour former une deuxième surface de portée (216) entre la tige (144) et le deuxième boîtier (210) en vue d'une rotation de la tige et du deuxième boîtier l'une par rapport à l'autre.

2. Ensemble de commutateur à fléau pour colonne de direction, selon la revendication 1, dans lequel :
- la tige (144) et la deuxième partie de boîtier (210) sont capables de tourner indépendamment l'une par rapport à l'autre autour du levier (200).

3. Ensemble de commutateur à fléau pour colonne de direction, selon la revendication 1, dans lequel les moyens pour former la première surface de portée (202) comprennent :
- des premiers moyens formant palier (202), supportés avec le levier (200), afin de supporter coaxialement en rotation la deuxième partie terminale de la tige (144) à l'intérieur du levier (200).

4. Ensemble de commutateur à fléau pour colonne de direction, selon la revendication 3, dans lequel les moyens pour former la deuxième surface de portée (216) comprennent :
- des deuxièmes moyens formant palier (216) engagés avec la tige (144) et avec la deuxième partie de boîtier (210), afin de supporter la tige (144) coaxialement et en rotation à l'intérieur de la deuxième partie de boîtier (210).

5. Ensemble de commutateur à fléau pour colonne de direction, selon la revendication 4, dans lequel :
- les deuxièmes moyens formant palier (202) incluent en outre des moyens, engagés entre le levier (200) et la tige (144), pour supporter coaxialement et en rotation une partie intermédiaire de la tige (144) par rapport au levier (200).

6. Ensemble de commutateur à fléau pour colonne de direction, selon la revendication 4, dans lequel les premiers et les deuxièmes moyens formant palier (202, 216) comprennent :
- un premier palier (202) susceptible d'être monté dans une extrémité du levier (200) et recevant en rotation la tige (144) à travers lui-même ; et
- un deuxième palier (216) engagé entre la deuxième partie de boîtier (210) et la tige (144), pour permettre une rotation indépendante de la tige (144) et de la deuxième partie de boîtier (210) l'une par rapport à l'autre.

7. Ensemble de commutateur à fléau pour colonne de direction, selon la revendication 4, dans lequel :
- les deuxièmes moyens formant palier (216) permettent une rotation indépendante de chacun des composants que sont la tige (144) et la deuxième partie de boîtier (210) l'un par rapport à l'autre et par rapport au levier (200).

8. Ensemble de commutateur à fléau pour colonne de direction, selon la revendication 1, dans lequel les moyens de connexion comprennent :
- des moyens (140), portés avec la première partie de boîtier (12), pour recevoir de manière fixe la première partie terminale de la tige (144) dans la première partie de boîtier (12).

9. Ensemble de commutateur à fléau pour colonne de direction, selon la revendication 1, comprenant en outre :
- la première extrémité de la tige (144) est attachée en pivotement sur un boîtier de commutateur (210) ;
- un moyeu (140) monté de manière fixe sur la deuxième extrémité de la tige (144),
- la partie de boîtier (12) possède une première et une deuxième extrémité, le moyeu (140) engageant de manière fixe la première extrémité de la partie de boîtier (12) ;
- une carte à circuit (120) disposée dans le boîtier (12) et engageant de manière fixe le moyeu (140), la carte à circuit (120) incluant une pluralité de pistes électriquement conductrices (126, 128) disposées à des intervalles temporisés, et des conducteurs électriques (122) connectés aux pistes conductrices et s'étendant vers l'extérieur de la tige (144) ;
- une première ouverture (28) formée dans la deuxième extrémité (16) du boîtier (12) ;
- un bouton (40) monté dans le boîtier (12) et mobile dans la première extrémité du boîtier entre une première et une deuxième position ;
- des moyens de sollicitation de bouton (52), montés dans le boîtier (12) et en assise entre la carte à circuit (120) et le bouton (40), pour solliciter le bouton (40) vers la première position ;
- une pluralité de premiers contacts électriques (58, 60) montés dans le bouton (40) et engageant certaines pistes conductrices (126, 128) sur la carte à circuit (120) lorsque le bouton (40) est dans la deuxième position pour fermer un circuit électrique connecté auxdites certaines pistes conductrices (126, 128) ;
- un support (70) ayant une première et une deuxième extrémité opposées (106, 108), le support (70) étant monté en coulissement dans le boîtier (12) ;
- une projection (94) en extension radialement vers l'extérieur et formée sur la deuxième extrémité (108) du support (70), et s'étendant en coulissement à travers une ouverture de paroi latérale (24) formée dans le boîtier (12) en position adjacente à la deuxième extrémité du boîtier ;
- une patte de positionnement (100) ayant une première et une deuxième extrémité opposées (106, 108), montée sur le support (70) pour se déplacer entre une première et une deuxième position;
- des moyens (114), montés sur le support (70) et engageant la deuxième extrémité de la patte de positionnement (100), pour solliciter la patte de positionnement (100) vers la première position ; et
- un bras (150) formé sur le moyeu (140) et s'étendant axialement depuis celui-ci, avec une première et une deuxième encoche espacées (154, 156) formées sur le bras (150) ;
- le bras (152) et la première extrémité (106) de la patte de positionnement (100) étant axialement alignés de telle sorte que la première extrémité (106) de la patte de positionnement (100) est mobile en coulissement entre la première et la deuxième encoche (154, 156) lors d'un mouvement de coulissement du support (70) ;
- les moyens de sollicitation (114) de la patte de positionnement engageant le bras (150) lorsque le support (70) est repoussé vers une position dans laquelle la première extrémité (106) de la patte de positionnement (100) s'étend au-delà de la deuxième encoche (156), et sollicitant le support (70) vers la deuxième encoche (156) ; et
- le levier (200) est contigu à une surface extérieure du boîtier (12).

10. Ensemble de commutateur à fléau selon la revendication 9, dans lequel :
- le bras (150) inclut une surface (170) qui s'étend sous un angle depuis la deuxième encoche (156).

11. Ensemble de commutateur à fléau selon la revendication 9, comprenant en outre :
- une pluralité de deuxièmes contacts électriques (76, 78, 80) montés sur le support (70), chacun des deuxièmes contacts électriques (76, 78, 80) ayant un bras élastique en porte-à-faux depuis une première extrémité (62) attachée au support (70) et disposé de façon mobile en éloignement depuis le support (70).

12. Ensemble de commutateur à fléau selon la revendication 11, comprenant en outre :
- des moyens (74), formés sur le support (70), pour recevoir une base (80) qui porte les deuxièmes contacts électriques (76, 78, 80) selon un engagement par encliquetage.

13. Ensemble de commutateur à fléau selon la revendication 11, dans lequel les deuxièmes extrémités de la pluralité de deuxièmes contacts électriques (76, 78, 80) s'étendent en direction de la deuxième extrémité du bouton (49).

14. Ensemble de commutateur à fléau selon la revendication 9, dans lequel :
- la pluralité de premiers contacts électriques (58, 60) sont montés sur une base (56) attachée de manière fixe sur le bouton (40) ; et
- chacun parmi la pluralité de premiers contacts électriques (58, 60) possède un bras élastique en porte-à-faux depuis une première extrémité (62) fixée sur la base (56) jusqu'à une deuxième extrémité (64) disposée de manière mobile en éloignement de la base.

15. Ensemble de commutateur à fléau selon la revendication 11, dans lequel :
- la carte à circuit (120) inclut une pluralité de premières pistes électriquement conductrices (126, 128) agencées en un premier groupe et engagées en coulissement par les premiers contacts électriques (58, 60) ;
- chacune parmi le premier groupe de pistes électriquement conductrices (126, 128) présente des points de départ différents depuis une extrémité de la carte à circuit (120) en vue d'un engagement sélectif avec des contacts choisis parmi les premiers contacts électriques (56, 58) tandis que les premiers contacts électriques sont déplacés avec le bouton (40) entre la première et la deuxième position du bouton (40);
- la carte à circuit (120) inclut une pluralité de deuxièmes pistes électriquement conductrices (130, 132) agencées en un deuxième groupe engagé en coulissement par la pluralité de deuxièmes contacts électriques (76, 78, 80) ; et
- chacune parmi le deuxième groupe de deuxièmes pistes électriquement conductrices (130, 132) présente des points de départ différents depuis une extrémité de la carte à circuit (120) en vue d'un engagement sélectif avec l'un des contacts de la pluralité de deuxièmes contacts (76, 78, 80) tandis que les deuxièmes contacts sont déplacés avec le support (70).

16. Ensemble de commutateur à fléau selon la revendication 9, dans lequel le bras (150) inclut :
- une paroi de base (162);
- une première extrémité connectée au moyeu (140) ;
- une deuxième extrémité (158) espacée de la première extrémité et s'étendant axialement vers l'extérieur depuis le moyeu (140);
- une première projection (160, 164) qui s'étend depuis la deuxième extrémité (158) du bras (150) sur un profil prédéterminé depuis la paroi de base (162);
- une deuxième projection (166) formée sur le bras (150) et espacée de la première projection (60) et s'étendant sur un deuxième profil, la première encoche (154) étant formée entre la première et la deuxième projection (164, 166) ; et
- une rampe angulaire (172) s'étendant depuis la fin de la deuxième projection (166) en formant un angle depuis la paroi de base (162), sous un angle prédéterminé susceptible d'être choisi, la deuxième encoche (156) étant formée entre la deuxième projection (100 66) et la rampe angulaire (172).

17. Ensemble de commutateur à fléau selon la revendication 16, dans lequel le support (70) comprend en outre :
- une base (72) ;
- une paire de parois écartées (86, 88) formées sur la base (72), une bride en extension vers l'intérieur (90) formée sur une extrémité de chaque paroi (88), faisant face à la bride (90) de la paroi opposée (86) en étant écartée de ladite bride pour définir une ouverture à travers les parois (86, 88) ;
- la patte de positionnement (100) étant montée autour des parois (86, 88) et sur la base (72) du support (70), la première extrémité (106) de la patte de positionnement (100) étant disposée en position adjacente et à l'extérieur de l'ouverture entre les brides (90) sur la paroi (88) ; et
- les moyens pour solliciter la patte de positionnement (100) incluant un ressort à boudin (114) en assise entre les brides (90) sur les parois (86, 88) du support (70) et la deuxième extrémité de la patte de positionnement (108).

18. Ensemble de commutateur à fléau selon la revendication 17, comprenant en outre :
- le ressort à boudin (114) est aligné avec le bras (150) sur le moyeu (140) de manière à être comprimé quand le support (70) est repoussé vers une position en déplaçant la première extrémité (106) de la patte de positionnement (100) le long de la rampe angulaire (172) sur le bras (150) du moyeu (140).

19. Ensemble de commutateur à fléau selon la revendication 9, dans lequel les moyens de sollicitation de bouton (52) repoussent la carte à circuit (120) en engagement avec le moyeu (140).

20. Ensemble de commutateur à fléau selon la revendication 9, comprenant en outre :
- une première et une deuxième paire (30, 34) de nervures diamétralement opposées formées à l'intérieur dans le boîtier (12) ;
- la carte à circuit (120) étant supportée entre la première et la deuxième paire (30, 34) de nervures ; et
- le support (70) étant supporté entre l'une parmi la première et la deuxième paire de nervures (30, 34) et le boîtier (12).
